# EUROPÄISCHE PATENTANMELDUNG

(11) **EP 4 142 123 A1**
(43) Veröffentlichungstag der Anmeldung: **01.03.2023**
(21) Anmeldenummer: 22178220.4
(22) Anmeldetag: 09.06.2022
(51) Int. Cl.: H02K 11/33

(54) **ANTRIEBSEINHEIT MIT EINER STEUEREINRICHTUNG**

(30) Priorität: 26.08.2021 DE 102021122176
(71) Anmelder: Edscha Engineering GmbH, 42855 Remscheid (DE)
(72) Erfinder: Zander, Marc, 42855 Remscheid (DE)
(74) Vertreter: IPrime Bonnekamp Sparing Patentanwaltsgesellschaft mbH

(57) **Zusammenfassung**

Die Erfindung betrifft eine Antriebseinheit, umfassend ein Gehäuse, einen in dem Gehäuse angeordneten Motor (2), eine zur Steuerung des Motors (2) eingerichtete Steuerungseinrichtung (11), umfassend eine erste Leiterplatine (12) mit einer Oberseite (12a) und einer Unterseite (12b), und eine zweite Leiterplatine (13) mit einer Oberseite (13a) und einer Unterseite (13b), wobei die erste Leiterplatine (12) über dem Motor (2) und die zweite Leiterplatine (13) über der ersten Leiterplatine (12) angeordnet ist, eine an der ersten Leiterplatine (12) angeordnete Leistungseinheit (19), umfassend zumindest einen ersten Filter (20) und einen Hallsensor (21), und eine an der zweiten Leiterplatine (13) angeordnete Steuereinheit (23), umfassend zumindest einen Mikrocontroller (24) und einen Spannungsregler (26). Eine Antriebseinheit mit einer Steuerungseinrichtung (11), welche bauraumsparend und in einfacher Weise ausgebildet ist, wird erfindungsgemäß dadurch geschaffen, dass auf der Unterseite (12b) der ersten Leiterplatine (12) zumindest ein Verpolungsschutz (29) angeordnet ist.

## Beschreibung

Die Erfindung betrifft eine Antriebseinheit, insbesondere für einen Fahrzeugklappenantrieb, nach dem Oberbegriff des Anspruchs 1.

Aus der Praxis sind Antriebseinheiten bekannt, welche beispielsweise für die angetriebene Verschwenkung von Fahrzeugklappen, insbesondere von Heckklappen oder Fahrzeugtüren, in Linearantrieben verwendet werden. Meist sind die in den Linearantrieben verwendeten Antriebseinheiten aufgrund der in dem Fahrzeug bereits vorhandenen elektrischen Anlagen als Elektromotoren ausgebildet, welche von außen durch entsprechende elektrische Zuleitungen in dem Fahrzeug mit Strom versorgt werden und gegebenenfalls mit Steuerleitungen zur Steuerung des Elektromotors verbunden sind. Dabei umfassen derartige Antriebsvorrichtungen oft eine externe Leiterplatine, welche eine Steuerungseinrichtung oder eine Steuereinheit umfasst und dabei außerhalb der Antriebseinheit angeordnet ist. Nachteilig werden für die Verbindung der Steuerung und die Anbindung an die externe Stromversorgung lange Kabelführungen benötigt, welche entsprechend nachteilig Bauraum in dem Fahrzeug einnehmen.

DE 10 2005 059 051 A1 zeigt eine Antriebseinheit für eine schwenkbare Fahrzeugklappe, wobei die Antriebseinheit ein Gehäuse umfasst und wobei in dem Gehäuse ein Motor angeordnet ist. An einer Oberseite des Gehäuses ist eine Motorsteuerung angeordnet, wobei die Motorsteuerung drei in einer sogenannten Sandwich-Bauweise übereinander angeordnete Leiterplatinen umfasst, auf der diverse Komponenten auf der Oberseite und/oder der Unterseite der jeweiligen Leiterplatine angeordnet sind. Auf einer der Oberseite des Gehäuses benachbart angeordneten ersten Leiterplatine sind Hall-Sensoren zur Überwachung des Betriebszustandes des Motors und Entstörfilter angeordnet. Auf einer über der ersten Leiterplatine angeordneten zweiten Leiterplatine sind Mikrocontroller, Spannungsregler, ein CAN Interface und ähnliche Bauteile angeordnet. Auf einer über der zweiten Leiterplatine angeordneten dritten Leiterplatine ist eine H-Brücke sowie ein Verpolungsschutz und/oder weitere Filter im Hinblick auf elektromagnetische Störungen angeordnet. Nachteilig an der Antriebseinheit ist, dass drei übereinander gestapelte Leiterplatine verwendet werden müssen, wobei hierdurch die Restbaulänge der Antriebseinheit entsprechend nachteilig nach unten beschränkt wird. Zudem erhöhen sich hierdurch die Herstellungskosten der Antriebseinheit.

US 2005 / 0 212 475 A1 zeigt eine Antriebseinheit, umfassend ein Gehäuse, einen in dem Gehäuse angeordneten Elektromotor und eine zur Steuerung des Motors eingerichtete Steuerungseinrichtung, wobei die Steuerungseinrichtung eine erste Leiterplatine mit einer Oberseite und einer Unterseite und eine zweite Leiterplatine mit einer Oberseite und einer Unterseite umfasst. Die erste Leiterplatine ist dabei über dem Motor und die zweite Leiterplatine über der ersten Leiterplatine angeordnet. An der Unterseite der ersten Leiterplatine ist eine Leistungseinheit angeordnet, wobei an der Oberseite der ersten Leiterplatine ein Hall-Sensor angeordnet ist.

DE 20 2006 020 411 U1 zeigt eine Vorrichtung zur elektrischen Kontaktierung und zumindest einer ersten und einer zweiten, jeweils mit Elektronikkomponenten bestückten und in einem Gehäuse angeordneten Leiterplatine, wobei die erste Leiterplatine über der zweiten Leiterplatine angeordnet ist.

DE 10 2020 208 631 A1 zeigt eine Elektronikeinheit für ein Elektrogerät wie einem elektrisch angetriebenen Einsatzwerkzeug, wobei die Elektronikeinheit eine erste Leiterplatine mit einer Oberseite und einer Unterseite und eine zweite Leiterplatine mit einer Oberseite und einer Unterseite umfasst, wobei die zweite Leiterplatine über der ersten Leiterplatine angeordnet ist. Die erste Leiterplatine ist als Leistungsplatine und die zweite Leiterplatine ist als Steuerungsplatine ausgebildet. Auf der zweiten Leiterplatine sind Mikroprozessoren und weitere integrierte Schaltkreise angeordnet.

DE 10 2019 130 651 A1 zeigt eine Antriebseinheit zum Antrieb einer Fahrzeugklappe, umfassend ein teleskopierbares Gehäuse, einen in dem Gehäuse angeordneten Motor und eine zur Steuerung des Motors eingerichtete, als Motorplatine ausgebildete Steuerungseinrichtung. Die Motorplatine ist über dem Motor angeordnet. Die Motorplatine und der Motor sind über elektrische Anschlüsse und einen Kabelbaum sowohl miteinander als auch mit dem Bordnetz des Fahrzeugs verbunden.

DE 10 2017 205 917 A1 zeigt eine Steuerungseinrichtung für eine Servolenkungsvorrichtung, wobei die Servolenkungsvorrichtung einen in einem Gehäuse angeordneten Motor umfasst. Die Steuerungseinrichtung umfasst eine erste Leitungsplatine mit einer Oberseite und einer Unterseite und eine zweite Leitungsplatine mit einer Oberseite und einer Unterseite, wobei die zweite Leiterplatine über der ersten Leiterplatine angeordnet ist. An der ersten Leiterplatine ist ein erster durch eine Drosselspule und ein Kondensator gebildeter Filter und ein Hallsensor angeordnet und an der zweiten Leiterplatine ist eine Steuereinheit angeordnet, umfassend einen Mikrocontroller und einem Spannungsregler. Weiter ist auf der ersten Leiterplatine ein Verpolungsschutzrelais angeordnet.

Es ist die Aufgabe der Erfindung, eine Antriebseinheit mit einer Steuerungseinrichtung bereitzustellen, welche bauraumsparend und in einfacher Weise ausgebildet ist.

Diese Aufgabe wird erfindungsgemäß durch eine Antriebseinheit mit den Merkmalen des Anspruchs 1 gelöst.

Nach einem Aspekt der Erfindung ist eine Antriebseinheit, insbesondere für einen Fahrzeugklappenantrieb geschaffen, umfassend ein Gehäuse, einen in dem Gehäuse angeordneten Motor, eine zur Steuerung des Motors eingerichtete Steuerungseinrichtung, umfassend eine erste Leiterplatine mit einer Oberseite und einer Unterseite, eine zweite Leiterplatine mit einer Oberseite und einer Unterseite, wobei die erste Leiterplatine über dem Motor und die zweite Leiterplatine über der ersten Leiterplatine angeordnet ist. Weiter umfasst die Antriebseinheit eine an der ersten Leiterplatine angeordnete Leistungseinheit, wobei die Leistungseinheit zumindest einen ersten Filter und einen Hallsensor umfasst. Zudem umfasst die Antriebseinheit eine an der zweiten Leiterplatine angeordnete Steuereinheit, umfassend zumindest einen Mikrocontroller und einen Spannungsregler. Die erfindungsgemäße Antriebseinheit ist dadurch gekennzeichnet, dass an der Unterseite der ersten Leiterplatine zumindest ein Verpolungsschutz angeordnet ist. Vorteilhaft wird hierdurch ermöglicht, dass die Leistungseinheit und die Steuereinheit bzw. die Steuerungseinrichtung kompakt an der Antriebseinheit angeordnet sind und somit die Antriebseinheit besonders bauraumsparend und einfach aufgebaut ist. Insbesondere wird eine bessere Ausnutzung des auf den beiden Leiterplatine vorhandenen Platzes erzielt, sodass für die aus dem Stand der Technik bekannten Funktionen sowohl einer Leistungseinheit als auch einer Steuereinheit durch lediglich zwei statt drei Leiterplatinen realisiert werden. Weiter vorteilhaft wird der auf der ersten Leiterplatine vorhandene Platz besser ausgenutzt, sodass die Leistungseinheit insgesamt platzsparend ausgebildet ist. Zudem wird vorteilhaft erreicht, dass die auf der ersten Leiterplatine angeordneten Bauteile insgesamt weiter voneinander beabstandet sind und so eine gegenseitige Beeinflussung derselben verringert wird.

In einer vorteilhaften Weiterbildung umfasst die Steuereinheit einen Fahrzeug-Bus Transceiver. Vorteilhaft wird die Kommunikation zwischen der Steuereinheit, welche auf der zweiten Leiterplatine angeordnet ist und gegebenenfalls weiteren im Fahrzeug vorhandenen Steuergeräten außerhalb der Antriebseinheit ermöglicht. In einer bevorzugten Weiterbildung ist vorgesehen, dass der Mikrocontroller, der Fahrzeug-Bus Transceiver und der Spannungsregler an der Oberseite der zweiten Leiterplatine angeordnet sind. Vorteilhaft wird hierdurch erreicht, dass die empfindlichen Bauteile der Steuereinheit weiter von der ersten Leiterplatine bzw. der darauf vorhandenen Leistungseinheit entfernt sind.

Zweckmäßigerweise ist die erste Leiterplatine mit der zweiten Leiterplatine über einen Steckverbinder verbunden. Bevorzugt umfasst der Steckverbinder eine Kontaktstiftleiste und eine Kontaktbuchse. In einer besonders bevorzugten Ausgestaltung ist die Kontaktstiftleiste an der Oberseite der ersten Leiterplatine angeordnet und die Kontaktbuchse an der Unterseite der zweiten Leiterplatine angeordnet. In einer hierzu alternativen Ausgestaltung ist die Kontaktstiftleiste an der Unterseite der zweiten Leiterplatine angeordnet und die Kontaktbuchse an der Oberseite der ersten Leiterplatine angeordnet. Vorteilhaft wird eine elektrische Verbindung zwischen der ersten Leiterplatine und der zweiten Leiterplatine durch Zusammenstecken der Kontaktstiftleiste und der Kontaktbuchse besonders einfach und sicher hergestellt. Weiter vorteilhaft sind keine zusätzlichen Kabel zur elektrischen Verbindung der ersten Leiterplatine und der zweiten Leiterplatine erforderlich. Darüber hinaus fungiert der Steckverbinder gleichzeitig aufgrund seiner im Vergleich zu Kabeln mechanischen Robustheit auch als Abstandshalter für die erste Leiterplatine und die zweite Leiterplatine. Vorteilhaft sind keine weiteren Bauteile insbesondere an der Oberseite der ersten Leiterplatine bzw. der Unterseite der zweiten Leiterplatine notwendig, sodass der auf den Leiterplatinen vorhandene Platz effizienter ausgenutzt wird.

Bevorzugt ist auf der ersten Leiterplatine ein Motortreiber angeordnet. Der Motortreiber ist eingangsseitig mit dem Mikrocontroller und ausgangsseitig mit dem Motor verbunden, sodass die von dem Mikrocontroller vorgesehenen Leistungsbefehle in die entsprechenden Stromstärken und Spannungen zum Antrieb des Motors umgewandelt werden.

In einer besonders bevorzugten Ausgestaltung weist die zweite Leiterplatine in einem Randbereich eine erste Aussparung und eine zweite Aussparung zur Durchführung eines Paares Stromversorgungskabel auf. Die Stromversorgungskabel sind zweckmäßigerweise mit der ersten Leiterplatine bzw. der auf der ersten Leiterplatine angeordneten Leistungseinheit verbunden. In einer zweckmäßigen Weiterbildung weist die zweite Leiterplatine in einem Randbereich weiter zumindest eine dritte Aussparung zur Durchführung eines Paares Steuerleitungskabel auf.

Vorteilhaft wird durch die erste Aussparung, die zweite Aussparung und die dritte Aussparung erreicht, dass die Stromversorgungkabel bzw. Steuerleitungskabel platzsparend verlegt werden können und insbesondere in radialer Richtung keinen über den gesamten Umfang der zweiten Leiterplatine hinausgehenden Platz benötigen. Weiter vorteilhaft kann optional ein zusätzlich abschirmendes Steuergehäuse über die Steuerungseinrichtung angeordnet werden, wobei das Steuergehäuse an einer Oberseite entsprechende Aussparungen zur Durchführung der Paare Stromversorgungkabel bzw. Steuerleitungskabel aufweist.

Besonders bevorzugt weist die erste Leiterplatine zwei erste Rundlöcher auf, welche zur elektrischen Verbindung mit dem Paar Stromversorgungskabel vorgesehen sind. Weiter weist die erste Leiterplatine zwei zweite Rundlöcher auf, welche zur elektrischen Verbindung mit dem Paar Steuerleitungskabel vorgesehen sind. Vorteilhaft sind die beiden zweiten Rundlöcher zwischen den beiden ersten Rundlöchern angeordnet. Vorteilhaft kann so ein symmetrischer Aufbau für einen die Stromversorgungskabel und Steuerleitungskabel umfassenden Kabelbaum gewählt werden, welcher auch im Hinblick auf die Übersichtlichkeit der anzuschließen Kabel vorteilhaft ist. Besonders bevorzugt sind die ersten Rundlöcher jeweils unterhalb der ersten Aussparung und der zweiten Aussparung angeordnet. Weiter bevorzugt sind die zwei zweiten Rundlöcher unterhalb der dritten Aussparung angeordnet. Vorteilhaft könne die Stromversorgungskabel und die Steuerleitungskabel ohne Verbiegung an der zweiten Leiterplatine vorbeigeführt und in die Rundlöcher eingesteckt werden.

In einer vorteilhaften Weiterbildung ist der Hallsensor oder zumindest eine Messsonde des Hallsensors auf der Unterseite der ersten Leiterplatine angeordnet. In einer zweckmäßigen Ausgestaltung der Antriebseinheit ist oberhalb des Gehäuses ein Ringmagnet angeordnet, wobei der Ringmagnet über eine mit dem Motor gekoppelte Antriebswelle angetrieben drehbar ist. Zweckmäßig ist der Ringmagnet hierzu drehfest mit der Antriebswelle verbunden. Vorteilhaft wird hierdurch in besonders kompakter Weise eine Drehzahlmessung des Motors ermöglicht.

Zweckmäßig umfasst das Gehäuse an einem oberen Ende ein Deckelelement, welche das Gehäuse nach oben abdichtet. Vorteilhaft wird der in dem Gehäuse angeordneten Motor dadurch vor Feuchtigkeit und dem Eindringen von Verschmutzungen geschützt. Besonders bevorzugt umfasst die Antriebseinheit weiter eine Verbindungsvorrichtung zur elektrischen Verbindung der Steuerungseinrichtung mit dem Motor. Die Verbindungsvorrichtung ist in einer vorteilhaften Ausgestaltung an einem oberen Ende des Gehäuses angeordnet. Bevorzugt ist die Verbindungsvorrichtung im Bereich des Deckelelementes angeordnet. Zweckmäßigerweise positioniert die Verbindungsvorrichtung die Steuerungseinrichtung derart über dem Motor bzw. dem Gehäuse, dass die Steuerungseinrichtung konzentrisch zu einer Antriebswelle des Motors oder einer Antriebsachse der Antriebseinheit ausgerichtet ist.

In einer bevorzugten Ausgestaltung umfasst die Verbindungsvorrichtung einen ersten Kontaktstift, einen zweiten Kontaktstift und einen dritten Kontaktstift. Zweckmäßigerweise durchsetzen die Kontaktstifte das Deckelement an dem oberen Ende des Gehäuses. Vorteilhaft weisen die Kontaktstifte an ihren der ersten Leiterplatine zugewandten oberen Enden jeweils verjüngte Kontaktabschnitte auf, welche an darunterliegenden breiteren Mittelabschnitten angrenzen. In einer zweckmäßigen Weiterbildung weist die erste Leiterplatine zu den Kontaktabschnitten passende Kontaktbohrungen auf, in welche die Kontaktstifte der Verbindungsvorrichtung einführbar sind.

Die Kontaktstifte weisen vorteilhaft in dem Kontaktabschnitt einen zu den jeweiligen Kontaktbohrungen passende Querschnitte auf, wobei der Querschnitt in den Mittelabschnitten der Kontaktstifte eine größere Fläche als die Kontaktbohrungen aufweist, sodass die erste Leiterplatine auf den Mittelabschnitten der Kontaktstifte mechanisch abgestützt wird.

Vorteilhaft wird die erste Leiterplatine bzw. die Steuerungseinrichtung über die Verbindungsvorrichtung nicht nur elektrisch mit dem Motor verbunden, sondern definiert durch die oben genannte Ausgestaltung der Kontaktstifte auch einen festen Abstand der ersten Leiterplatine zu dem Motor, insbesondere den Abstand der ersten Leiterplatine zu dem zwischen dem Motor und der ersten Leiterplatine angeordneten Ringmagneten. Hierdurch wird insbesondere sichergestellt, dass der an der ersten Leiterplatine angeordnete Hallsensor in einem festgelegten optimalen Abstand zu dem Ringmagneten positioniert wird, sodass eine gute Messgenauigkeit für die Messung der Motordrehzahl erreicht wird.

Weitere Vorteile, Weiterbildungen und Eigenschaften der Erfindung ergeben sich aus der nachstehenden Beschreibung eines bevorzugten Ausführungsbeispiels sowie aus den abhängigen Ansprüchen.

Die Erfindung wird nachfolgend unter Bezugnahme auf die anliegenden Zeichnungen anhand eines bevorzugten Ausführungsbeispiels der Erfindung näher erläutert.
- Fig. 1: zeigt ein bevorzugtes Ausführungsbeispiel einer Antriebseinheit in einer Perspektivansicht.
- Fig. 2: zeigt die Antriebseinheit aus Fig. 1 in einer Teilexplosionsdarstellung.
- Fig. 3: zeigt die Antriebseinheit aus Fig. 2 aus einem veränderten Ansichtswinkel.

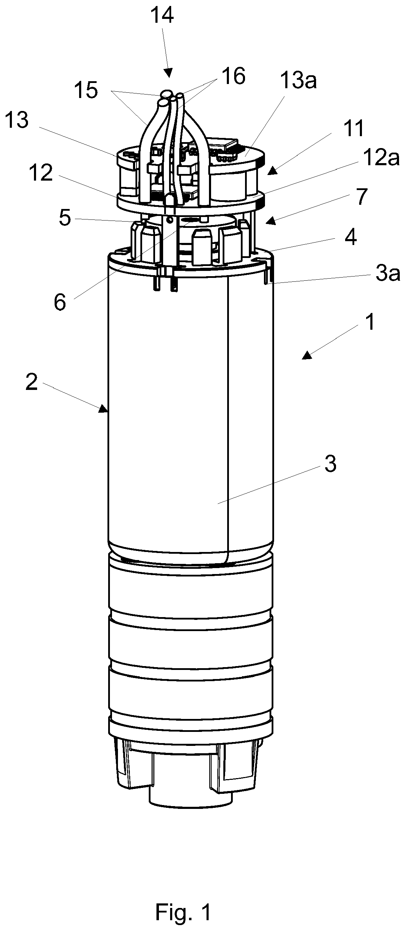

Fig. 1 zeigt ein bevorzugtes Ausführungsbeispiel einer erfindungsgemäßen Antriebseinheit 1 in einer Perspektivansicht. Die Antriebseinheit 1 umfasst einen als Elektromotor ausgebildeten Motor 2 und ein Gehäuse 3, in welchem der Motor 2 aufgenommen ist. An einem oberen Ende 3a des Gehäuses 3 ist ein Deckelelement 4 angeordnet, sodass der in dem Gehäuse 3 angeordnete Motor 2 vor dem Eindringen von Feuchtigkeit und Verschmutzungen geschützt ist. Das Deckelelement 4 ist hierzu in das offene obere Ende 3a des hohlzylinderförmigen Gehäuses 3 eingepresst. Oberhalb des Deckelelementes 4 ist ein Ringmagnet 5 angeordnet, welcher über eine mit dem Motor 2 gekoppelte Antriebswelle 6, welche drehfest mit dem Ringmagneten 5 verbunden ist, in Drehung versetzt werden kann.

Mittels einer Verbindungvorrichtung 7 ist eine Steuerungseinrichtung 11 über dem Deckelelement 4 bzw. dem Motor 2 fest angeordnet, wobei die Steuerungseinrichtung 11 eine erste Leiterplatine 12 mit einer Oberseite 12a und eine zweite Leiterplatine 13 mit einer Oberseite 13a umfasst. Die Verbindungsvorrichtung 7 dient der elektrischen Verbindung der Steuerungseinrichtung 11 mit dem Motor 2, so dass zur Steuerung des Motors 2 erforderliche Steuerungssignale bzw. Ströme und Spannungen an den Motor 2 weitergeleitet werden können. Die Verbindungsvorrichtung 7 positioniert zudem vorteilhaft die Steuerungseinrichtung 11 derart über dem Motor 2 bzw. dem Gehäuse 3, dass die Steuerungseinrichtung 11 konzentrisch zu der Antriebswelle 6 des Motors 2 ausgerichtet ist.

Die Steuerungseinrichtung 11 ist über einen Kabelbaum 14 mit dem Fahrzeug verbunden, wobei über den Kabelbaum 14 sowohl die primäre Stromversorgung als auch die Weiterleitung von Steuersignalen an die Steuerungseinrichtung 11 erfolgt. Hierzu umfasst der Kabelbaum 14 sowohl ein Paar Stromversorgungskabel 15 als auch ein Paar Steuerleitungskabel 16. Der Kabelbaum 14 ist elektrisch an der ersten Leiterplatine 12 angeschlossen.

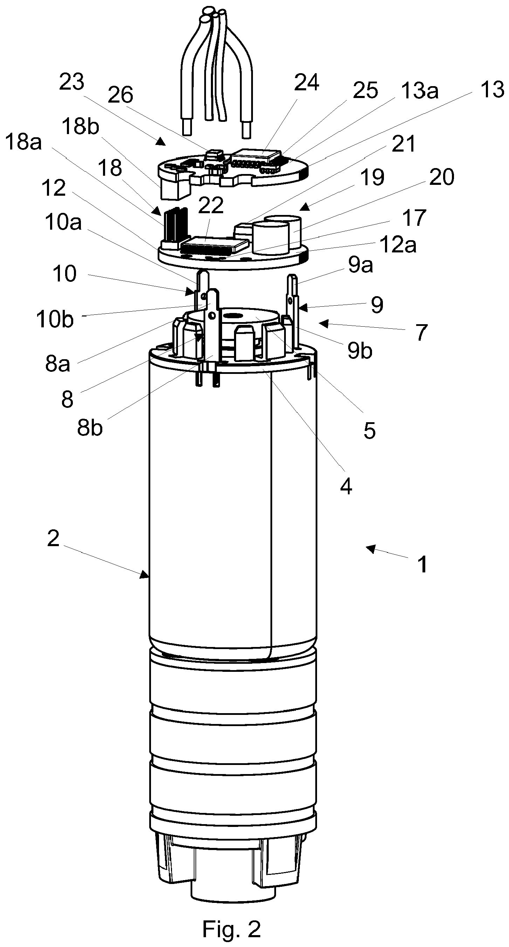

Fig. 2 zeigt die Antriebseinheit 1 aus Fig. 1 in einer Teilexplosionsdarstellung. In dieser Ansicht zu erkennen, dass die Verbindungsvorrichtung 7 einen ersten leitfähigen Kontaktstift 8, einen zweiten leitfähigen Kontaktstift 9 und einen dritten leitfähigen Kontaktstift 10 umfasst, welche senkrecht durch das Deckelelement 4 geführt sind. Die Kontaktstifte 8, 9, 10 weisen an ihren oberen Enden jeweils verjüngte Kontaktabschnitt 8a, 9a, 10a auf, welche an breitere Mittelabschnitte 8b, 9b, 10b angrenzen. Vorteilhaft können die Kontaktstifte 8, 9, 10 so problemlos in an der ersten Leiterplatine 12 vorgesehene Kontaktbohrungen 17 eingeführt werden. Die Kontaktbohrungen 17 weisen eine dem Querschnitt der Kontaktstifte 8, 9, 10 in den Kontaktabschnitten 8a, 9a, 10a entsprechende längliche Formen auf.

Die Kontaktbohrungen 17 weisen eine kleinere Breite als die sich an die verjüngten Kontaktabschnitte 8a, 9a, 10a angrenzenden Mittelabschnitte 8b, 9b, 10b der Kontaktstifte 8, 9, 10 auf. Die erste Leiterplatine 12 kann sich so auf den jeweiligen Mittelabschnitten 8b, 9b, 10b abstützen, wenn die erste Leiterplatine 12 auf die Kontaktstifte 8, 9, 10 aufgesteckt wird. Vorteilhaft wird so sichergestellt, dass die erste Leiterplatine 12 in einem definierten Abstand oberhalb des drehbaren Ringmagneten 5 angeordnet ist und gleichzeitig eine elektrische Verbindung zwischen der ersten Leiterplatine 12 und dem Motor 2 besteht.

Die erste Leiterplatine 12 ist mit der zweiten Leiterplatine 13 über einen Steckverbinder 18 elektrisch verbindbar. Die Steckverbinder 18 umfasst eine Kontaktstiftleiste 18a, welche an der Oberseite 12a der ersten Leiterplatine 12 angeordnet ist und eine an der Unterseite der zweiten Leiterplatine 13 angeordnete Kontaktbuchse 18b zur Herstellung einer elektrischen Verbindung zwischen der ersten Leiterplatine 12 und der zweiten Leiterplatine 13. Vorteilhaft ist die Montage der Steuerungseinrichtung 11 unkompliziert durch Zusammenstecken der beiden Leiterplatine 12, 13 über den Steckverbinder 18 realisiert. Weiter vorteilhaft fungiert der Steckverbinder 18 gleichzeitig als Abstandhalter zwischen der ersten Leiterplatine 12 und der zweiten Leiterplatine 13.

Auf der ersten Leiterplatine 12 ist eine Leistungseinheit 19 angeordnet. Die Leistungseinheit 19 umfasst dabei einen Filter 20, einen Hallsensor 21 und einen Motortreiber 22. Auf der zweiten Leiterplatine 13 ist eine Steuereinheit 23 angeordnet. Die Steuereinheit umfasst einen Mikrocontroller 24, einen Fahrzeug-Bus Transceiver 25 und einen Spannungsregler 26, welche allesamt an der Oberseite 13a der zweiten Leiterplatine angeordnet sind.

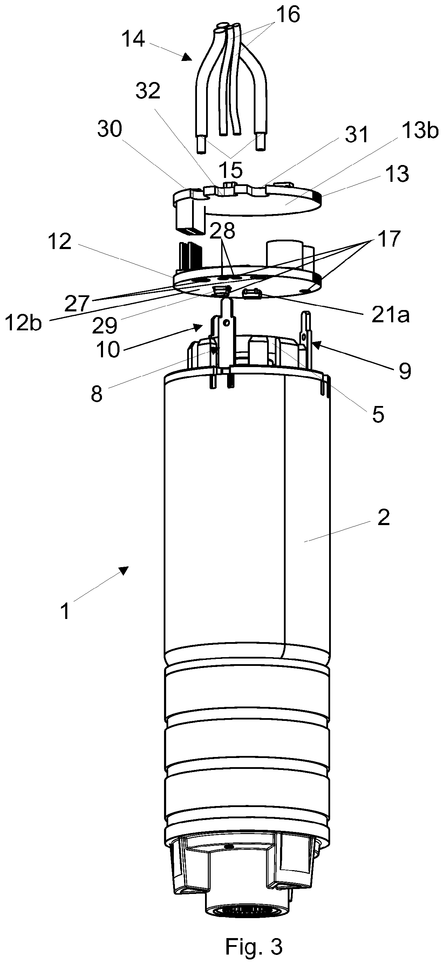

Fig. 3 zeigt die Antriebseinheit 1 aus Fig. 2 aus einem veränderten Ansichtswinkel, in der eine Unterseite 12b der ersten Leiterplatine 12 und eine Unterseite 13b der zweiten Leiterplatine 13 zu sehen sind. In dieser Ansicht ist zu erkennen, dass eine Messsonde 21a des Hallsensors an der Unterseite 12b der ersten Leiterplatine 12 angeordnet ist, so dass diese zweckmäßigerweise in einem geringen Abstand zu dem Ringmagneten 5 positioniert ist, um die erforderliche Messgenauigkeit für die Messung der Motordrehzahl des Motors 2 zu erzielen. An der Unterseite 12b der ersten Leiterplatine 12 sind zudem die für die Einführung der Kontaktstifte 8, 9, 10 vorgesehenen Kontaktbohrung 17 angeordnet. Weiter ist ein Verpolungsschutz 29 an der Unterseite 12b der ersten Leiterplatine 12 angeordnet. Der Verpolungsschutz 29 ist in dem hier gezeigten Ausführungsbeispiel als elektrischer Verpolungsschutz ausgebildet. Vorteilhaft wird ein Schutz der in der Antriebseinheit verbauten Bauteile bei Anlegen einer Spannung in falscher Polarität in jedem Fall sichergestellt, insbesondere für den Fall, dass ein mechanischer Verpolungsschutz nicht vorgesehen ist oder zumindest versagt.

Die erste Leiterplatine 12 weist weiter zwei erste Rundlöcher 27 auf, welche zur Verbindung mit dem Paar Stromversorgungskabel 15 vorgesehen sind. Weiter weist die erste Leiterplatine 12 zwei zwischen den beiden ersten Rundlöchern 27 angeordnete zweite Rundlöcher 28 auf, welche zur Verbindung mit dem Paar Steuerleitungskabel 16 vorgesehen sind. In dem hier gezeigten Ausführungsbeispiel ist der Durchmesser der ersten Rundlöcher 27 größer als der Durchmesser der zweiten Rundlöcher 28, da der Durchmesser des Paares Stromversorgungskabel 15 größer als der Durchmesser des Paares Steuerleitungskabel 16 ist.

Die zweite Leiterplatine 13 weist eine runde Grundform auf. In einem Randbereich weist die zweite Leiterplatine 13 eine erste Aussparung 30 und eine zweite Aussparung 31 auf, welche zur Durchführung des Paares Stromversorgungskabel 15 vorgesehen sind. Weiter weist die zweite Leiterplatine 13 eine dritte Aussparung 32 auf, welche zur Durchführung des Paares Steuerleitungskabel 16 vorgesehen ist. Die dritte Aussparung 32 ist zwischen der ersten Aussparung 30 und der zweiten Aussparung 31 angeordnet. Vorteilhaft wird der gesamte Außendurchmesser der Antriebseinheit 1 durch den Kabelbaum 14 unverändert belassen, so dass die Antriebseinheit 1 bauraumsparend ausgebildet wird. Die erste Aussparung 30 und die zweite Aussparung 31 sind vorteilhaft über den ersten Rundlöchern 27 und die dritte Aussparung 32 ist oberhalb der zweiten Rundlöcher 28 angeordnet, sodass die Stromversorgungskabel 15 und die Steuerleitungskabel 16 nicht mechanisch verbogen werden, wenn dieses von oben in die ersten Rundlöcher 27bzw. zweiten Rundlöcher 28 eingesteckt werden.

Vorstehend wurde die Erfindung anhand eines Ausführungsbeispiels erläutert, bei dem die Steuerungseinrichtung 11 offen an dem oberen Ende 3a des Gehäuses 3 angeordnet ist. Es versteht sich, dass die Steuerungseinrichtung 11 ein Steuergehäuse umfassen kann, welche zum Zwecke der elektromagnetischen Abschirmung oder auch mechanischem Schutz die Steuerungseinrichtung 11 umschließt.

## Patentansprüche

1. Antriebseinheit, insbesondere für eine Fahrzeugklappenantrieb, umfassend
ein Gehäuse (3),
einen in dem Gehäuse angeordneten Motor (2),
eine zur Steuerung des Motors (2) eingerichtete Steuerungseinrichtung (11), umfassend eine erste Leiterplatine (12) mit einer Oberseite (12a) und einer Unterseite (12b), und eine zweite Leiterplatine (13) mit einer Oberseite (13a) und einer Unterseite (13b), wobei die erste Leiterplatine (12) über dem Motor (2) und die zweite Leiterplatine (13) über der ersten Leiterplatine (12) angeordnet ist,
eine an der ersten Leiterplatine (12) angeordnete Leistungseinheit (19), umfassend zumindest einen ersten Filter (20) und einen Hallsensor (21), und
eine an der zweiten Leiterplatine (13) angeordnete Steuereinheit (23), umfassend zumindest einen Mikrocontroller (24) und einen Spannungsregler (26),
**dadurch gekennzeichnet,**
**dass** an der Unterseite (12b) der ersten Leiterplatine (12) zumindest ein Verpolungsschutz (29) angeordnet ist.

2. Antriebseinheit nach Anspruch 1, **dadurch gekennzeichnet, dass** die Steuereinheit einen Fahrzeug-Bus Transceiver (25) umfasst.

3. Antriebseinheit nach Anspruch 2, **dadurch gekennzeichnet, dass** der Mikrocontroller (24), der Fahrzeug-Bus Transceiver (25) und der Spannungsregler (26) an der Oberseite (13a) der zweiten Leiterplatine angeordnet sind.

4. Antriebseinheit nach einem der vorhergehenden Ansprüche, **dadurch gekennzeichnet, dass** die erste Leiterplatine (12) mit der zweiten Leiterplatine (13) über einen Steckverbinder (18) verbunden ist.

5. Antriebseinheit nach Anspruch 4, **dadurch gekennzeichnet, dass** der Steckverbinder (18) eine Kontaktstiftleiste (18a) und eine Kontaktbuchse (18b) umfasst.

6. Antriebseinheit nach Anspruch 5, **dadurch gekennzeichnet, dass** die Kontaktstiftleiste (18a) an der Oberseite (12a) der erste Leiterplatine (12) angeordnet ist und die Kontaktbuchse (18b) an der Unterseite (13b) der zweiten Leiterplatine (13) angeordnet ist.

7. Antriebseinheit nach Anspruch 5, **dadurch gekennzeichnet, dass** die Kontaktstiftleiste (18a) an der Unterseite (13b) der zweiten Leiterplatine (13) angeordnet ist und die Kontaktbuchse (18b) an der Oberseite (12a) der erste Leiterplatine (12) angeordnet ist.

8. Antriebseinheit nach einem der vorhergehenden Ansprüche, **dadurch gekennzeichnet, dass** auf der ersten Leiterplatine (12) ein Motortreiber (22) angeordnet ist.

9. Antriebseinheit nach Anspruch 8, **dadurch gekennzeichnet, dass** der Motortreiber (22) eingangsseitig mit dem Mikrocontroller (24) und ausgangsseitig mit dem Motor (2) verbunden ist.

10. Antriebseinheit nach einem der vorhergehenden Ansprüche, **dadurch gekennzeichnet, dass** die zweite Leiterplatine (13) in einem Randbereich eine erste Aussparung (30) und eine zweite Aussparung (31) zur Durchführung eines Paares Stromversorgungskabel (15) aufweist.

11. Antriebseinheit nach Anspruch 10, **dadurch gekennzeichnet, dass** die zweite Leiterplatine (13) in einem Randbereich eine dritte Aussparung (33) zur Durchführung eines Paares Steuerleitungskabel (16) aufweist.

12. Antriebseinheit nach Anspruch 11, **dadurch gekennzeichnet, dass** die erste Leiterplatine (12) zwei erste Rundlöcher (27) aufweist, welche zur elektrischen Verbindung mit dem Paar Stromversorgungskabel (15) vorgesehen sind.

13. Antriebseinheit nach Anspruch 12, **dadurch gekennzeichnet, dass** die erste Leiterplatine (12) zwei zweite Rundlöcher (28) auf, welche zur elektrischen Verbindung mit dem Paar Steuerleitungskabel (16) vorgesehen sind.

14. Antriebseinheit nach Anspruch 13, **dadurch gekennzeichnet, dass** die beiden zweiten Rundlöcher (28) zwischen den beiden ersten Rundlöchern (27) angeordnet sind.

15. Antriebseinheit nach Anspruch 14, **dadurch gekennzeichnet, dass** die ersten Rundlöcher (27) jeweils unterhalb der ersten Aussparung (30) und der zweiten Aussparung (31) und die zwei zweiten Rundlöcher (28) unterhalb der dritten Aussparung (33) angeordnet sind.
